# EUROPÄISCHE PATENTANMELDUNG

(11) **EP 3 363 562 A1**
(43) Veröffentlichungstag der Anmeldung: **22.08.2018**
(21) Anmeldenummer: 17156500.5
(22) Anmeldetag: 16.02.2017
(51) Int. Cl.: B22F 3/105, B33Y 50/02

(54) **VERBESSERTE ADDITIVE FERTIGUNG**

(71) Anmelder: Siemens Aktiengesellschaft, 80333 München (DE)
(72) Erfinder: Zettner, Jürgen, 90587 Veitsbronn (DE)

(57) **Zusammenfassung**

Auf einen Untergrund wird eine Pulverschicht (8) aufgebracht. Mittels eines Prozessstrahls (12) werden lokal erste Teilbereiche (10) der Schicht (8) aufgeheizt, so dass sich die in den ersten Teilbereichen (10) befindlichen Körner des Pulvers (9) zwar erwärmen, aber noch nicht miteinander verbinden. Es wird ein Temperaturprofil der aufgebrachten Schicht (8) erfasst und in der Nähe des jeweiligen ersten Teilbereichs (10) als Funktion des Abstands (x) von dem jeweiligen ersten Teilbereich (10) und/oder der Zeit ausgewertet. Im Rahmen der Auswertung wird anhand des Temperaturprofils für den jeweiligen ersten Teilbereich (10) zumindest die lokale Wärmeleitfähigkeit (k) oder lokale Diffusivität (D) quantitativ oder qualitativ ermittelt. Mittels des Prozessstrahls (12) werden sodann lokal zweite Teilbereiche (11) der aufgebrachten Schicht (8), die die ersten Teilbereiche (10) zumindest teilweise überlappen, aufgeheizt, so dass sich die in den zweiten Teilbereichen (11) befindlichen Körner des Pulvers (9) miteinander verbinden. Mindestens eine die Aufheizung der zweiten Teilbereiche (11) beeinflussende Prozessgröße des Prozessstrahls (12) wird in Abhängigkeit von der zuvor für den zumindest überlappenden ersten Teilbereich (10) ermittelten lokalen Wärmeleitfähigkeit (k) oder Diffusivität (D) bestimmt.

## Beschreibung

Die vorliegende Erfindung geht aus von einem Betriebsverfahren für eine additive Fertigungseinrichtung, wobei iterativ folgende Sequenz von Schritten ausgeführt wird:
- mittels einer Aufbringeinrichtung wird auf einen Untergrund eine Schicht eines Pulvers aufgebracht,
- mittels des Prozessstrahls werden in einem Heizvorgang lokal Teilbereiche der aufgebrachten Schicht aufgeheizt, so dass sich die in dem jeweiligen Teilbereich befindlichen Körner des Pulvers nicht nur erwärmen, sondern auch miteinander verbinden.

Die vorliegende Erfindung geht weiterhin aus von einem Computerprogramm für eine Steuereinrichtung einer additiven Fertigungseinrichtung, wobei das Computerprogramm Maschinencode umfasst, der von der Steuereinrichtung unmittelbar abarbeitbar ist, wobei die Abarbeitung des Maschinencodes durch die Steuereinrichtung bewirkt, dass die Steuereinrichtung die additive Fertigungseinrichtung gemäß einem derartigen Betriebsverfahren betreibt.

Die vorliegende Erfindung geht weiterhin aus von einer Steuereinrichtung für eine additive Fertigungseinrichtung, die mit einem derartigen Computerprogramm programmiert ist, so dass sie im Betrieb die additive Fertigungseinrichtung gemäß einem derartigen Betriebsverfahren betreibt.

Die vorliegende Erfindung geht weiterhin aus von einer additiven Fertigungseinrichtung,
- wobei die additive Fertigungseinrichtung eine Aufbringeinrichtung aufweist, mittels derer auf einen Untergrund eine Schicht eines Pulvers aufgebracht wird,
- wobei die additive Fertigungseinrichtung einen Prozessstrahlgenerator aufweist, der einen Prozessstrahl generiert, mittels dessen lokal jeweils ein Teilbereich der aufgebrachten Schicht aufgeheizt wird,
- wobei die additive Fertigungseinrichtung eine Erfassungseinrichtung aufweist, mittels derer eine Temperatur der aufgebrachten Schicht erfasst wird,
- wobei die additive Fertigungseinrichtung eine derartige Steuereinrichtung aufweist.

Ein derartiges Betriebsverfahren, das entsprechende Computerprogramm, die Steuereinrichtung und die Fertigungseinrichtung sind beispielsweise aus der DE 102 36 697 A1 bekannt.

Bei der DE 102 36 697 A1 wird vor dem Heizvorgang in einem weiteren Heizvorgang die aufgebrachte Pulverschicht nach und nach vorgewärmt. Das Vorwärmen scheint großflächig (über die gesamte aufgebrachte Schicht) zu erfolgen. Anhand der Vorwärmung wird die Wärmekapazität des Materials als Funktion der Temperatur ermittelt.

Mittels der additiven Fertigung erfolgt die schichtweise Fertigung oftmals komplexer dreidimensionaler Strukturen. Ein typisches Beispiel ist das sogenannte SLM = selective laser melting. Weitere Beispiele sind laser sintering, electron beam melting und electron beam sintering. Die Qualität der gefertigten Strukturen, beispielsweise deren Maßhaltigkeit, die Qualität der Verbindung der einzelnen Schichten miteinander, Lunker und Einschlüsse, ist von vielen Parametern abhängig.

Im Stand der Technik ist eine Vielzahl von Fertigungsverfahren bekannt. Alle diese Verfahren weisen jedoch noch gewisse Nachteile auf.

Die Aufgabe der vorliegenden Erfindung besteht darin, verbesserte Möglichkeiten für die additive Fertigung zu schaffen.

Die Aufgabe wird durch ein Betriebsverfahren für eine additive Fertigungseinrichtung mit den Merkmalen des Anspruchs 1 gelöst. Vorteilhafte Ausgestaltungen des Betriebsverfahrens sind Gegenstand der abhängigen Ansprüche 2 bis 12.

Erfindungsgemäß wird ein Betriebsverfahren der eingangs genannten Art durch folgende Schritte ausgestaltet: Es werden mittels des Prozessstrahls vor dem eigentlichen Heizvorgang (nachfolgend zweiter Heizvorgang genannt) in einem ersten Heizvorgang lokal erste Teilbereiche der aufgebrachten Schicht aufgeheizt, so dass sich die in dem jeweiligen ersten Teilbereich befindlichen Körner des Pulvers zwar erwärmen, aber noch nicht miteinander verbinden. Die ersten Teilbereiche sind derart bestimmt, dass die Teilbereiche, welche im zweiten Heizvorgang aufgeheizt werden (nachfolgend als zweite Teilbereiche bezeichnet), die ersten Teilbereiche zumindest teilweise überlappen. Mittels einer Erfassungseinrichtung wird ein Temperaturprofil der aufgebrachten Schicht erfasst. Das Temperaturprofil wird in der Nähe des jeweiligen ersten Teilbereichs als Funktion des Abstands von dem jeweiligen ersten Teilbereich ausgewertet. Alternativ oder zusätzlich kann eine Auswertung als Funktion der Zeit erfolgen. Im Rahmen der Auswertung wird anhand des Temperaturprofils für den jeweiligen ersten Teilbereich zumindest die lokale Wärmeleitfähigkeit oder die lokale Diffusivität ermittelt. Die Ermittlung erfolgt vorzugsweise quantitativ. Zumindest erfolgt jedoch eine qualitative Ermittlung, d.h. es wird ermittelt, ob die lokale Wärmeleitfähigkeit bzw. die lokale Diffusivität in bestimmten Bereichen größer oder kleiner als in anderen Bereichen ist. Mindestens eine die Aufheizung der zweiten Teilbereiche beeinflussende Prozessgröße des Prozessstrahls wird in Abhängigkeit von der zuvor für den zumindest überlappenden ersten Teilbereich ermittelten lokalen Wärmeleitfähigkeit oder Diffusivität bestimmt.

Dadurch kann erreicht werden, dass die tatsächliche Aufheizung der zweiten Teilbereiche mit einer gewünschten Aufheizung besser korreliert als im Stand der Technik. Aufgrund der verbesserten Aufheizung ergibt sich eine verbesserte und genauere Verbindung der im zweiten Heizvorgang aufgeheizten zweiten Teilbereiche mit dem Untergrund.

Üblicherweise erfolgt während des zweiten Heizvorgangs in den zweiten Teilbereichen ein Sintern oder ein Schmelzen des aufgebrachten Pulvers. Weiterhin ist üblicherweise der Prozessstrahl ein Laser- oder Elektronenstrahl. Es sind jedoch auch andere Verbindungsvorgänge und/oder andere Prozessstrahlen denkbar.

Es ist möglich, dass mindestens einer der ersten Teilbereiche als lineare Struktur ausgebildet ist. In diesem Fall wird das Temperaturprofil, soweit eine räumliche Auswertung erfolgt, vorzugsweise orthogonal zu der linearen Struktur in einer Dimension ausgewertet. Ebenso ist es möglich, dass mindestens einer der ersten Teilbereiche als punktuelle Struktur ausgebildet ist. In diesem Fall kann das Temperaturprofil, soweit eine räumliche Auswertung erfolgt, orthogonal zu der punktuellen Struktur in einer Dimension oder in zwei Dimensionen ausgewertet werden. Die Maßnahmen sind auch insofern miteinander kombinierbar, als von mehreren ersten Teilbereichen einer als lineare Struktur und ein anderer als punktuelle Struktur ausgebildet sein kann. Auch ist es möglich, dass von mehreren punktuellen Strukturen bei einer eine räumliche Auswertung in einer Dimension erfolgt und bei einer anderen punktuellen Struktur eine räumliche Auswertung in zwei Dimensionen.

Die ersten Teilbereiche sind vorzugsweise auf die zweiten Teilbereiche in geeigneter Weise abgestimmt. Insbesondere kann in dem Fall, dass ein zweiter Teilbereich als langgestreckte Struktur ausgebildet ist oder eine Grenzkante aufweist, der jeweilige erste Teilbereich als lineare Struktur ausgebildet sein. Der erste Teilbereich sollte in diesem Fall entweder parallel oder orthogonal zu dem zweiten Teilbereich oder parallel oder orthogonal zu der Grenzkante verlaufen. In dem Fall, dass ein zweiter Teilbereich eine Ecke oder einen Überhang aufweist, umfasst der jeweilige erste Teilbereich vorzugsweise die Ecke oder den Überhang.

Vorzugsweise wird vor dem ersten Heizvorgang die lokale Dicke der aufgebrachten Schicht ermittelt. Der Begriff "lokale Dicke" bedeutet hierbei, dass die Dicke ortsaufgelöst über die Fläche der Schicht ermittelt wird. Entsprechende Verfahren sind dem Fachmann bekannt. In diesem Fall kann die lokale Dicke im Rahmen der Bestimmung mindestens einer die Aufheizung der ersten Teilbereiche beeinflussenden Prozessgröße des Prozessstrahls, im Rahmen der Ermittlung der lokalen Wärmeleitfähigkeit oder lokalen Diffusivität und/oder im Rahmen der Bestimmung der mindestens einen die Aufheizung der zweiten Teilbereiche beeinflussenden Prozessgröße des Prozessstrahls zusätzlich zur lokalen Wärmeleitfähigkeit oder lokalen Diffusivität berücksichtigt werden.

Alternativ ist es möglich, dass die lokale Dicke der aufgebrachten Schicht nach dem ersten Heizvorgang ermittelt wird. In diesem Fall kann die lokale Dicke im Rahmen der Ermittlung der lokalen Wärmeleitfähigkeit oder lokalen Diffusivität und/ oder im Rahmen der Bestimmung der mindestens einen die Aufheizung der zweiten Teilbereiche beeinflussenden Prozessgröße des Prozessstrahls zusätzlich zur lokalen Wärmeleitfähigkeit oder lokalen Diffusivität berücksichtigt werden.

Unter Umständen ist es sogar möglich, dass nach dem Ermitteln der lokalen Dicke, aber vor dem nächsten Heizvorgang ein Ausgleichsvorgang mit dem Ziel, Schwankungen der lokalen Dicke auszugleichen, durchgeführt wird. Beispielsweise kann eine Basisplatte, welche den anfänglichen Untergrund bei der Fertigung des herzustellenden Bauteils bildet, gerüttelt werden. Alternativ oder zusätzlich kann beispielsweise eine Rakelvorrichtung, mittels derer das aufgebrachte Pulver verteilt wird, angesteuert werden.

Es ist weiterhin möglich, dass zusätzlich die lokale Wärmekapazität ermittelt wird und auch die lokale Wärmekapazität im Rahmen der Bestimmung der mindestens einen die Aufheizung der zweiten Teilbereiche beeinflussenden Prozessgröße des Prozessstrahls berücksichtigt wird.

Als Prozessgröße des Prozessstrahls kann beispielsweise mindestens eine der folgenden Größen verwendet werden:
- die Leistung des Prozessstrahls als solche,
- die Vorschubgeschwindigkeit, mit welcher der Prozessstrahl über die Schicht bewegt wird,
- eine Modulation der Leistung des Prozessstrahls,
- eine Fokusgröße des Prozessstrahls.

Vorzugsweise wird das Temperaturprofil vor der Erfassung durch die Erfassungseinrichtung spektral gefiltert, so dass der Prozessstrahl selbst im Temperaturprofil ausgeblendet wird. Dadurch kann das Signal-Rausch-Verhältnis optimiert werden.

Es ist möglich, dass als Erfassungseinrichtung Thermographie-Detektoren verwendet werden. Es sind jedoch auch andere Erfassungseinrichtungen - beispielsweise CCD-Kameras - verwendbar.

Die Aufgabe wird weiterhin durch ein Computerprogramm mit den Merkmalen des Anspruchs 13 gelöst. Erfindungsgemäß bewirkt die Abarbeitung des Maschinencodes durch die Steuereinrichtung, dass die Steuereinrichtung die additive Fertigungseinrichtung gemäß einem erfindungsgemäßen Betriebsverfahren betreibt.

Die Aufgabe wird weiterhin durch eine Steuereinrichtung mit den Merkmalen des Anspruchs 14 gelöst. Erfindungsgemäß ist die Steuereinrichtung mit einem erfindungsgemäßen Computerprogramm programmiert, so dass sie im Betrieb die additive Fertigungseinrichtung gemäß einem erfindungsgemäßen Betriebsverfahren betreibt.

Die Aufgabe wird weiterhin durch eine additive Fertigungsmaschine mit den Merkmalen des Anspruchs 15 gelöst. Erfindungsgemäß wird mittels der Erfassungseinrichtung ein Temperaturprofil der aufgebrachten Schicht erfasst. Weiterhin ist die Steuereinrichtung der Fertigungseinrichtung erfindungsgemäß ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: Teile einer additiven Fertigungseinrichtung,
- FIG 2: Teile der additiven Fertigungseinrichtung von FIG 1,
- FIG 3: ein Ablaufdiagramm,
- FIG 4: eine Draufsicht auf eine Pulverschicht,
- FIG 5: ein eindimensionales Temperaturprofil,
- FIG 6: ein zweidimensionales Temperaturprofil,
- FIG 7: ein Ablaufdiagramm,
- FIG 8: ein Ablaufdiagramm und
- FIG 9: ein Ablaufdiagramm.

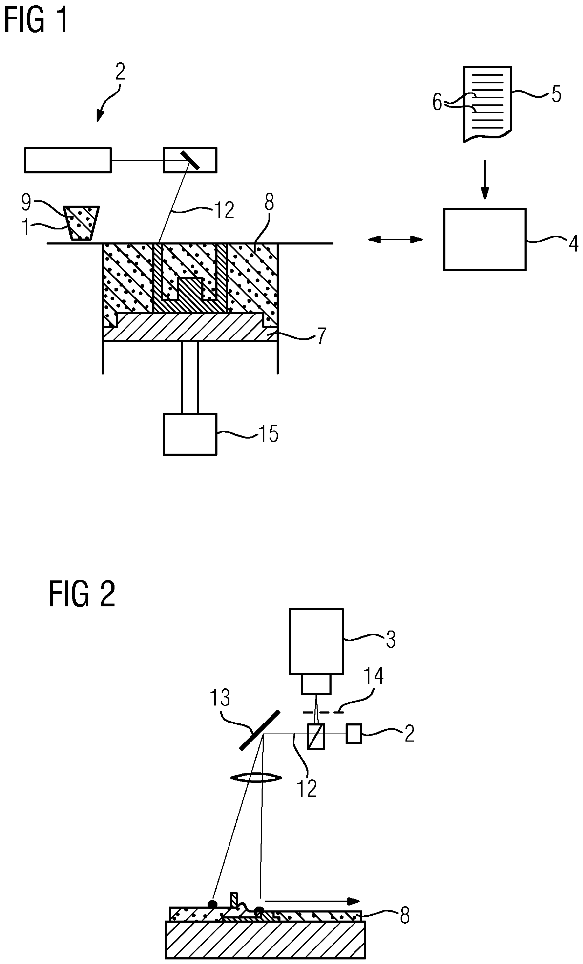

Die FIG 1 und 2 zeigen jeweils Teile einer additiven Fertigungseinrichtung. Manche Teile der additiven Fertigungseinrichtung sind hierbei nur in FIG 1 dargestellt, nicht aber in FIG 2. Bei anderen Teilen ist es umgekehrt. Unabhängig davon, ob bestimmte Teile der additiven Fertigungseinrichtung ausschließlich in FIG 1, ausschließlich in FIG 2 oder sowohl in FIG 1 als auch in FIG 2 dargestellt sind, sind sie jedoch Bestandteile der additiven Fertigungseinrichtung.

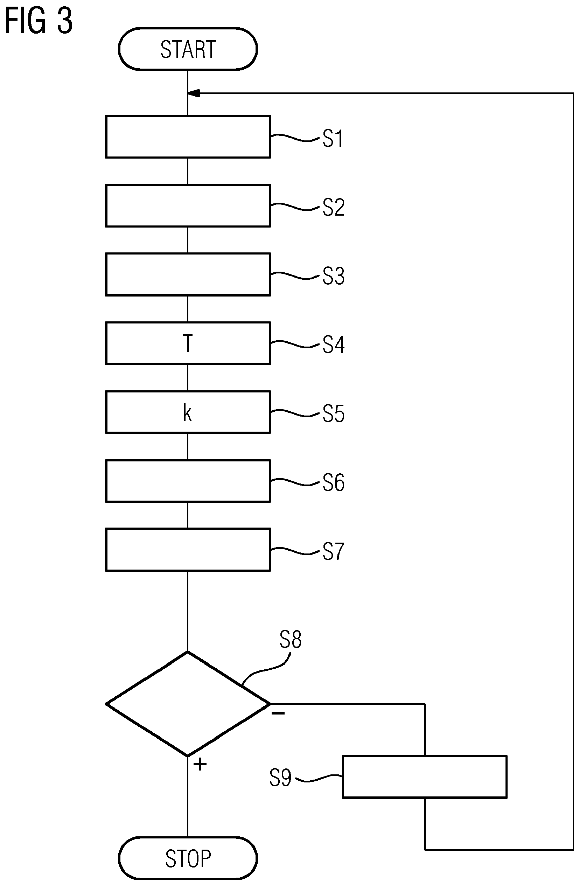

Gemäß den FIG 1 und 2 weist eine additive Fertigungseinrichtung eine Aufbringeinrichtung 1, einen Prozessstrahlgenerator 2, eine Erfassungseinrichtung 3 und eine Steuereinrichtung 4 auf. Die Steuereinrichtung 4 ist mit einem Computerprogramm 5 programmiert. Das Computerprogramm 5 umfasst Maschinencode 6, der von der Steuereinrichtung 4 unmittelbar abarbeitbar ist. Die Abarbeitung des Maschinencodes 6 durch die Steuereinrichtung 4 bewirkt, dass die Steuereinrichtung 4 die additive Fertigungseinrichtung gemäß einem Betriebsverfahren betreibt, das nachstehend in Verbindung mit FIG 3 (und den weiteren FIG) näher erläutert wird.

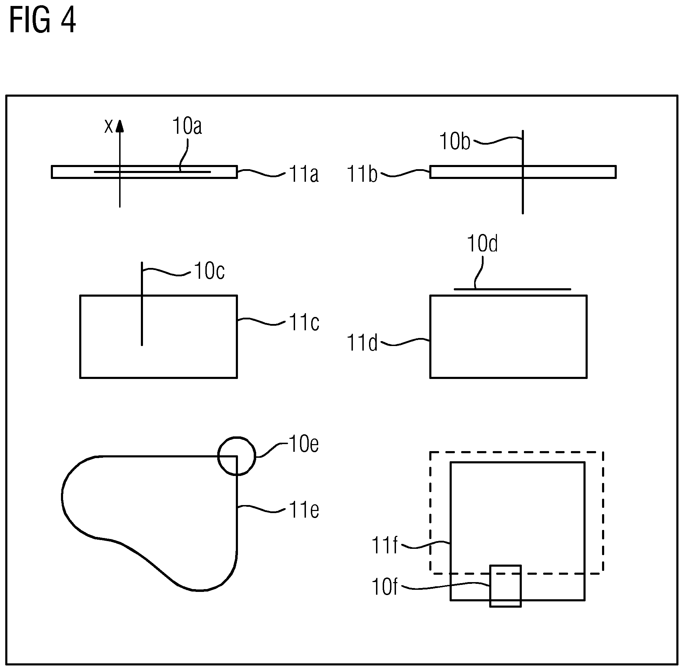

Gemäß FIG 3 steuert die Steuereinrichtung 4 in einem Schritt S1 die Aufbringeinrichtung 1 an, so dass die Aufbringeinrichtung 1 auf einen Untergrund eine Schicht 8 eines Pulvers 9 aufträgt. Der Untergrund ist beim Auftragen der ersten Schicht 8 mit einer Bodenplatte 7 der additiven Fertigungseinrichtung identisch. Beim Auftragen der nachfolgenden Schichten 8 ist der Untergrund mit der jeweils unmittelbar zuvor aufgebrachten Schicht 8 identisch. FIG 1 zeigt rein beispielhaft von der Seite den Zustand nach dem Auftragen des Pulvers 9, wobei zuvor bereits Schichten 8 aufgebracht wurden. FIG 4 zeigt diesen Zustand von oben.

In einem Schritt S2 bestimmt die Steuereinrichtung 4 erste Teilbereiche 10 der Schicht 8. Insbesondere bestimmt die Steuereinrichtung 4 für jeden zweiten Teilbereich 11 der Schicht 8 mindestens einen zugehörigen ersten Teilbereich 10. Die zweiten Teilbereiche 11 der Schicht 8 sind diejenigen Bereiche der Schicht 8, welche später mit dem Untergrund verbunden werden sollen. Die Bestimmung wird von der Steuereinrichtung 4 derart vorgenommen, dass die ersten Teilbereiche 10 und zweiten Teilbereiche 11 sich zumindest teilweise überlappen. Für die nachfolgende Erläuterung der Kriterien zur Bestimmung der zugehörigen ersten Teilbereiche 11 werden die ersten und zweiten Teilbereiche 10, 11 nachfolgend jeweils um einen kleinen Buchstaben (a bis f) ergänzt.
- Wenn beispielsweise ein zweiter Teilbereich 11a existiert, der als langgestreckte Struktur ausgebildet ist, kann der zugehörige erste Teilbereich 10a als parallel zu dem zweiten Teilbereich 11a verlaufende lineare Struktur 10a oder ausgebildet sein. Alternativ ist es möglich, dass in dem Fall, dass ein zweiter Teilbereich 11b als langgestreckte Struktur ausgebildet ist, der jeweilige erste Teilbereich 10b als orthogonal zu dem zweiten Teilbereich 10b verlaufende lineare Struktur ausgebildet ist. Eine langgestreckte Struktur eines zweiten Teilbereichs 11a, 11b liegt nicht nur dann vor, wenn diese gerade ist. Sie kann auch gekrümmt sein. Die lineare Struktur des zugehörigen ersten Teilbereichs 10a, 10b ist in der Regel jedoch gerade.
- Die analogen Vorgehensweisen sind in den Fällen möglich, dass ein zweiter Teilbereich 11c, 11d eine Grenzkante aufweist, siehe die zweiten Teilbereiche 11c, 11d. Eine Grenzkante kann, muss aber nicht gerade verlaufen. Sie darf jedoch keine Knicke aufweisen (in diesem Fall handelt es sich um eine Ecke). Der zugehörige erste Teilbereich 10c, 10d ist auch in diesem Fall vorzugsweise wieder eine lineare (im Sinne von gerade) Struktur.
- Wenn ein zweiter Teilbereich 11e eine Ecke aufweist, sollte der jeweilige erste Teilbereich 10e vorzugsweise die Ecke umfassen. Eine Ecke ist ein Bereich, in dem zwei Grenzkanten der entsprechenden zweiten Teilbereichen 11e unter Bildung eines Winkels aneinander angrenzen. Der Winkel ist sowohl von 0° als auch von 180° verschieden. In der Regel liegt er zwischen 45° und 135° oder zwischen 225° und 315°. Analoges gilt, wenn ein zweiter Teilbereich 11f einen Überhang aufweist, siehe den ersten Teilbereich 10f. Ein Überhang liegt vor, wenn der zweite Teilbereich 11f in der darunterliegenden Schicht 8 (siehe FIG 1) kein Pendant hat. In diesem Fall sollte der jeweilige erste Teilbereich 10f vorzugsweise den Überhang umfassen. Die darunterliegende Schicht 8 ist für den zweiten Teilbereich 11f (und nur für diesen) in FIG 4 gestrichelt eingezeichnet.

In einem Schritt S3 steuert die Steuereinrichtung 4 den Prozessstrahlgenerator 2 an, so dass der Prozessstrahlgenerator 2 einen Prozessstrahl 12 generiert. Der Prozessstrahl 12 kann beispielsweise ein Laser- oder Elektronenstrahl sein. Der Prozessstrahl 12 wird mittels einer Ablenkeinrichtung 13 (die als Bestandteil des Prozessstrahlgenerators 2 angesehen werden kann) auf die ersten Teilbereiche 10 gerichtet. Die ersten Teilbereiche 10 werden dadurch aufgeheizt. Die Ansteuerung des Prozessstrahlgenerators 2 durch die Steuereinrichtung 4 erfolgt jedoch nur derart, dass mittels des Prozessstrahls 12 die sich in dem jeweiligen ersten Teilbereich 10 befindlichen Körner des Pulvers 9 zwar erwärmen, aber noch nicht miteinander verbinden. Weiterhin erfolgt nur das Aufheizen der ersten Teilbereiche 10. Außerhalb der ersten Teilbereiche 10 erfolgt kein Aufheizen. Das Aufheizen des Schrittes S3 erfolgt also nur lokal in den ersten Teilbereichen 10 der aufgebrachten Schicht 8.

Nach dem Aufheizen der ersten Teilbereiche 10 wird mittels der Erfassungseinrichtung 3 ein Temperaturprofil der aufgebrachten Schicht 8 erfasst. Es wird also die durch das Aufheizen im Schritt S3 hervorgerufene Temperatur T als Funktion des Ortes in der Schicht 8 erfasst. Die Erfassungseinrichtung 3 kann beispielsweise Thermographie-Detektoren verwenden. Alternativ oder zusätzlich kann im Strahlengang zwischen der Schicht 8 und der Erfassungseinrichtung 3 ein Filter 14 angeordnet sein. Mittels des Filters 14 wird in diesem Fall das Temperaturprofil vor der Erfassung durch die Erfassungseinrichtung 3 spektral gefiltert, so dass der Prozessstrahl 12 selbst im Temperaturprofil ausgeblendet wird. Es ist möglich, dass die Erfassungseinrichtung 3 das Temperaturprofil kontinuierlich erfasst. Alternativ ist es möglich, dass die Erfassungseinrichtung 3 das Temperaturprofil nur aufgrund einer Ansteuerung durch die Steuereinrichtung 4 erfasst. In beiden Fällen wird das Temperaturprofil der Steuereinrichtung 4 zugeführt, welche es in einem Schritt S4 entgegennimmt. Weiterhin ist es möglich, dass die Erfassungseinrichtung 3 das Temperaturprofil nur in der näheren Umgebung der ersten Teilbereiche 10 erfasst. Vorzugsweise erfolgt die Erfassung des Temperaturprofils jedoch über die gesamte Schicht 8. Weiterhin ist es möglich, dass die Erfassungseinrichtung 3 das Temperaturprofil nach dem Aufheizen nur einmal erfasst. Alternativ ist es möglich, dass die Erfassungseinrichtung 3 das Temperaturprofil nach dem Aufheizen mehrmals erfasst.

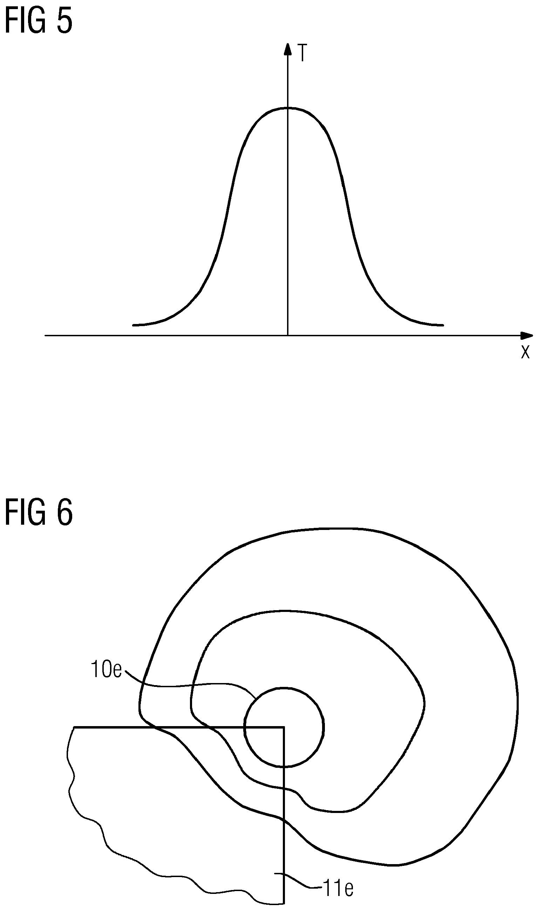

In einem Schritt S5 wertet die Steuereinrichtung 4 sodann das erfasste Temperaturprofil aus. Wenn ein jeweiliger erster Teilbereich 10 - beispielsweise der erste Teilbereich 10a - als lineare Struktur ausgebildet ist, kann insbesondere das Temperaturprofil orthogonal zu der linearen Struktur ausgewertet werden. Es wird also die Temperatur T als Funktion des Abstands x von der entsprechenden linearen Struktur des ersten Teilbereichs 10 ermittelt und ausgewertet. Dies zeigen die FIG 4 und 5, wobei sich aus FIG 4 für den ersten Teilbereich 10a die Richtung des Abstands x ergibt und FIG 5 die Temperatur als Funktion des Abstands x zeigt. In diesem Fall erfolgt also eine Auswertung in einer (1) Dimension. Die gleiche (eindimensionale) Auswertung ist möglich, wenn ein jeweiliger erster Teilbereich 10 - vorliegend beispielsweise der erste Teilbereich 10e - als (mehr oder minder) punktuelle Struktur ausgebildet ist. Auch dies zeigen die FIG 4 und 5, wobei sich aus FIG 4 für den ersten Teilbereich 10e die Richtung des Abstands x ergibt und FIG 5 die Temperatur als Funktion des Abstands x zeigt. Alternativ ist in diesem Fall aber auch eine Auswertung in zwei Dimensionen möglich. Dies zeigt FIG 6, in der rein exemplarisch Kurven gleicher Temperatur (Isothermen) und die zugehörigen Temperaturwerte eingetragen sind. Im Falle einer Auswertung in zwei Dimensionen kann beispielsweise bei einer kreisförmigen Ausprägung von Isothermen auf eine anisotrope Verteilung der Wärmeleitfähigkeit k geschlossen werden. Wenn die Erfassungseinrichtung 3 das Temperaturprofil nach dem Aufheizen mehrmals erfasst hat, kann im Schritt S5 - alternativ oder zusätzlich zur räumlichen Auswertung der Aufheizung - auch eine zeitliche Auswertung erfolgen.

Die Auswertung der Temperaturprofile für die verschiedenen ersten Teilbereiche 10 ist in der Regel unabhängig voneinander möglich. Denn in der Regel kommt es nur auf relativ kurze Entfernungen von dem jeweiligen ersten Teilbereich 10 an. Es reicht also eine Auswertung in der Nähe des jeweiligen ersten Teilbereichs 10 aus. Das Aufheizen der verschiedenen ersten Teilbereiche 10 beeinflusst sich also nicht gegenseitig.

Im Rahmen der Auswertung des Schrittes S5 ermittelt die Steuereinrichtung 4 anhand des Temperaturprofils für den jeweiligen ersten Teilbereich 10 zumindest die lokale Wärmeleitfähigkeit k (Einheit W/mK). Vorzugsweise erfolgt eine quantitative Ermittlung der lokalen Wärmeleitfähigkeit k, also eines jeweiligen Zahlenwertes. In manchen Fällen kann es jedoch ausreichend sein, die Wärmeleitfähigkeit k zu schätzen bzw. nur qualitativ zu ermitteln, also zu ermitteln, ob sie in bestimmten ersten Teilbereichen 10 größer oder kleiner als in anderen ersten Teilbereichen 10 ist.

In einem Schritt S6 bestimmt die Steuereinrichtung 4 für die zweiten Teilbereiche 11 jeweils eine Prozessgröße des Prozessstrahls 12. Die Bestimmung erfolgt individuell für den jeweiligen zweiten Teilbereich 11 in Abhängigkeit von der lokalen Wärmeleitfähigkeit k, welche die Steuereinrichtung 4 im Schritt S5 zuvor für den zumindest überlappenden ersten Teilbereich 10 ermittelt hat. Die Prozessgröße ist eine Prozessgröße, welche die Aufheizung des jeweiligen zweiten Teilbereichs 11 beeinflusst.

Als Prozessgröße des Prozessstrahls 12 kann beispielsweise die Leistung des Prozessstrahls 12 als solche verwendet werden. Mit "Leistung" ist hierbei nicht die im Prozessstrahl 12 insgesamt enthaltene Leistung gemeint, sondern die Leistungsdichte (in W/m²) des Prozessstrahls 12 auf der Schicht 8. Alternativ oder zusätzlich kann als Prozessgröße des Prozessstrahls 12 beispielsweise die Vorschubgeschwindigkeit verwendet werden, mit welcher der Prozessstrahl 12 über die Schicht 8 bewegt wird. Alternativ oder zusätzlich kann als Prozessgröße des Prozessstrahls 12 beispielsweise eine Modulation der Leistung des Prozessstrahls 12 verwendet werden. So kann es beispielsweise einen Unterschied bewirken, ob ein Energieeintrag in einen bestimmten zweiten Teilbereich 11 gleichmäßig, gepulst oder in mehreren Intervallen erfolgt. Alternativ oder zusätzlich kann als Prozessgröße des Prozessstrahls 12 beispielsweise eine Fokusgröße des Prozessstrahls 12 verwendet werden.

Sodann steuert die Steuereinrichtung 4 in einem Schritt S7 erneut den Prozessstrahlgenerator 2 an, so dass der Prozessstrahlgenerator 2 einen Prozessstrahl 12 generiert. Der Prozessstrahl 12 wird mittels der Ablenkeinrichtung 13 auf die zweiten Teilbereiche 11 gerichtet. Die zweiten Teilbereiche 11 werden dadurch aufgeheizt. Die Ansteuerung des Prozessstrahlgenerators 2 durch die Steuereinrichtung 4 erfolgt im Gegensatz zum Schritt S3 jedoch derart, dass mittels des Prozessstrahls 12 die sich in dem jeweiligen zweiten Teilbereich 11 befindlichen Körner des Pulvers 9 nicht nur erwärmen, sondern auch miteinander verbinden. Beispielsweise kann während des zweiten Heizvorgangs in den zweiten Teilbereichen 11 ein Sintern oder ein Schmelzen des aufgebrachten Pulvers 9 erfolgen. Außerhalb der zweiten Teilbereiche 11 erfolgt jedoch kein Aufheizen. Das Aufheizen des Schrittes S7 erfolgt also nur lokal in den zweiten Teilbereichen 11 der aufgebrachten Schicht 8.

In einem Schritt S8 prüft die Steuereinrichtung 4, ob die Herstellung der herzustellenden Struktur abgeschlossen ist. Wenn dies nicht der Fall ist, steuert die Steuereinrichtung 4 in einem Schritt S9 einen Aktuator 15 an, so dass die Bodenplatte 7 um ein vorbestimmtes Maß - meist im Submillimeterbereich - abgesenkt wird. Danach geht die Steuereinrichtung 4 zum Schritt S1 zurück. Die Schritte S1 bis S7 werden somit iterativ ausgeführt, bis die Herstellung der herzustellenden Struktur abgeschlossen ist.

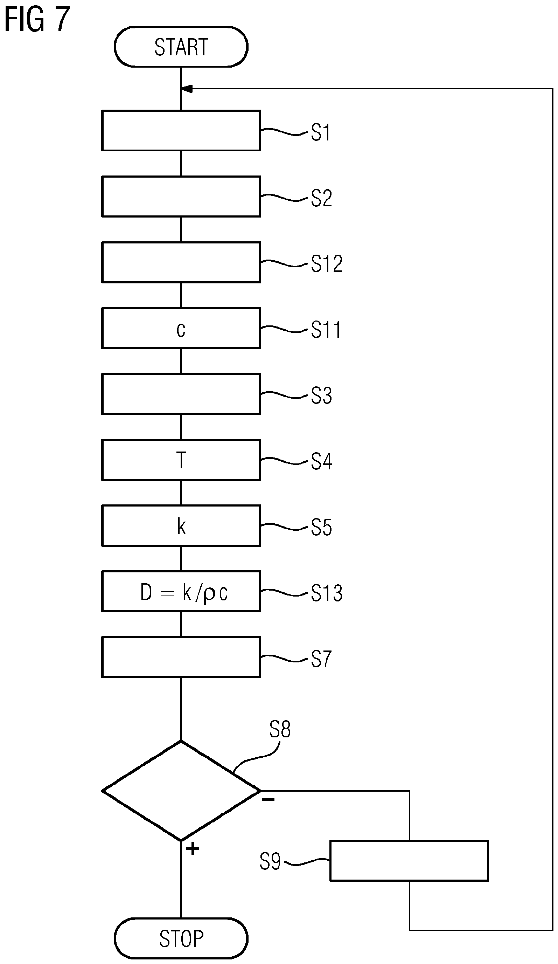

FIG 7 zeigt eine Modifikation der Vorgehensweise von FIG 3. Insbesondere umfasst auch die Vorgehensweise von FIG 7 die Schritte S1 bis S5 sowie S7 bis S9 von FIG 3.

Zusätzlich ist ein Schritt S11 vorhanden. Im Schritt S11 ermittelt die Steuereinrichtung 4 zusätzlich die lokale Wärmekapazität c des Materials, aus dem das Pulver 9 besteht (Einheit J/kgK). Falls erforderlich, zu diesem Zweck kann in einem dem Schritt S11 vorgeordneten Schritt S12 eine homogene, großflächige Aufheizung der Schicht 8 erfolgen. Analog zur Wärmeleitfähigkeit k erfolgt die Ermittlung der Wärmekapazität c vorzugsweise quantitativ, im Einzelfall jedoch auch nur qualitativ. Der Schritt S6 ist durch einen Schritt S13 ersetzt. Der Schritt S13 korrespondiert zwar im wesentlichen mit dem Schritt S6. Zusätzlich wird im Schritt S13 jedoch auch die lokale Wärmekapazität c im Rahmen der Bestimmung der mindestens einen Prozessgröße des Prozessstrahls 12 berücksichtigt. Beispielsweise kann die Steuereinrichtung 4 im Schritt S13 die lokale Diffusivität D = k/pc ermitteln. ρ ist die Dichte (Einheit kg/m³) des Materials, aus dem das Pulver 9 besteht.

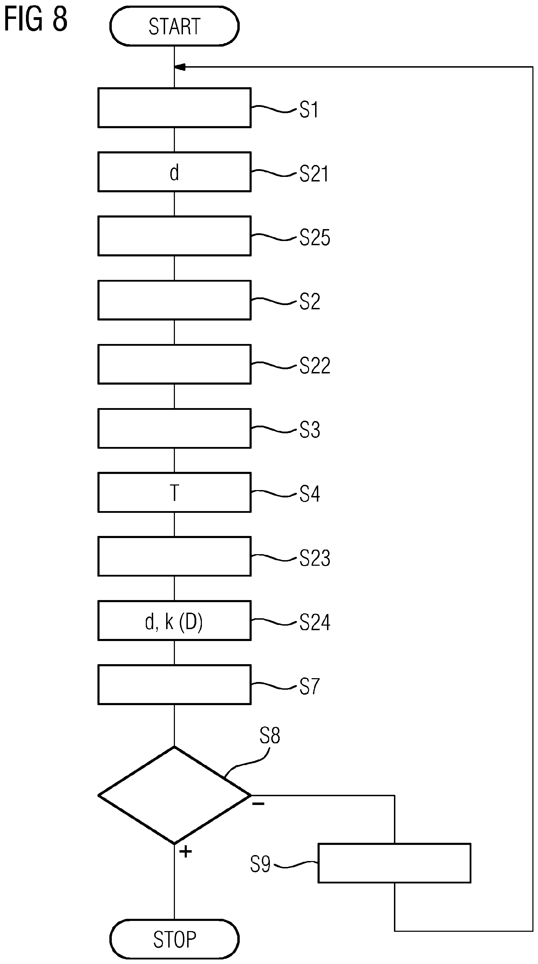

Die Vorgehensweisen der FIG 3 (und auch der FIG 7) können gemäß FIG 8 modifiziert werden. Gemäß FIG 8 wird von der Steuereinrichtung 4 in einem Schritt S21 vor dem ersten Heizvorgang die lokale Dicke d der aufgebrachten Schicht 8 ermittelt. Weiterhin wird von der Steuereinrichtung 4 in einem Schritt S22 eine Prozessgröße des Prozessstrahls 12 bestimmt. Die im Schritt S22 bestimmte Prozessgröße des Prozessstrahls 12 beeinflusst die Aufheizung der ersten Teilbereiche 10. Die Implementierung des Schrittes S3 ist somit durch den Schritt S22 beeinflusst. Alternativ oder zusätzlich ist es möglich, den Schritt S5 durch einen Schritt S23 zu ersetzen. Der Schritt S23 entspricht zwar im wesentlichen dem Schritt S5. Zusätzlich wird jedoch im Rahmen der Auswertung des Temperaturprofils - also der Ermittlung der lokalen Wärmeleitfähigkeit k oder der lokalen Diffusivität D - die ermittelte lokale Dicke d berücksichtigt. Alternativ oder zusätzlich ist es möglich, den Schritt S6 durch einen Schritt S24 zu ersetzen. Der Schritt S24 entspricht zwar im wesentlichen dem Schritt S6. Zusätzlich wird jedoch im Rahmen der Bestimmung der Prozessgröße des Prozessstrahls 12 die lokale Dicke d berücksichtigt. Die Prozessgröße des Prozessstrahls 12 wird also nicht nur in Abhängigkeit von der lokalen Wärmeleitfähigkeit k oder lokalen Diffusivität D ermittelt, sondern zusätzlich auch in Abhängigkeit von der lokalen Dicke d. Weiterhin ist es möglich, in einem Schritt S25 einen Ausgleichsvorgang durchzuführen. Der Ausgleichsvorgang hat das Ziel, Schwankungen der lokalen Dicke d auszugleichen. Der Schritt S25 wird im Rahmen der Ausgestaltung von FIG 8, falls er vorhanden ist, stets nach dem Schritt S21 und vor dem ersten Heizvorgang ausgeführt, also vor dem Schritt S3.

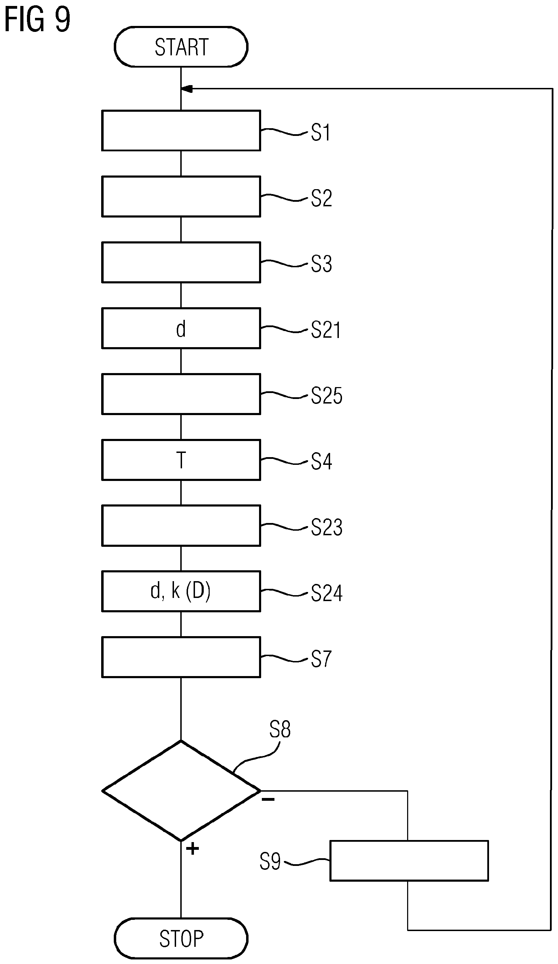

Alternativ zur Modifikation gemäß FIG 8 ist eine Modifikation gemäß FIG 9 möglich. FIG 9 zeigt eine ähnliche Vorgehensweise wie FIG 8. Bei der Vorgehensweise gemäß FIG 9 wird der Schritt S21 jedoch nicht vor dem ersten Heizvorgang (Schritt S3) ausgeführt, sondern nach dem ersten Heizvorgang (aber vor dem zweiten Heizvorgang). In diesem Fall entfällt der Schritt S22. Es ist jedoch nach wie vor möglich, die lokale Dicke d im Rahmen des Schrittes S23 - also im Rahmen der Auswertung des Temperaturprofils bzw. der Ermittlung der lokalen Wärmeleitfähigkeit k oder der lokalen Diffusivität D - zu berücksichtigen und/oder im Rahmen des Schrittes S24 - also im Rahmen der Bestimmung der Prozessgröße des Prozessstrahls 12 in Abhängigkeit von der lokalen Wärmeleitfähigkeit k oder lokalen Diffusivität D - zu berücksichtigen. Auch der Schritt S25 kann weiterhin vorhanden sein. Er wird im Rahmen der Modifikation gemäß FIG 9 jedoch nicht vor dem ersten Heizvorgang, sondern vor dem zweiten Heizvorgang ausgeführt.

Zusammengefasst betrifft die vorliegende Erfindung somit folgenden Sachverhalt:
Auf einen Untergrund wird eine Pulverschicht 8 aufgebracht. Mittels eines Prozessstrahls 12 werden lokal erste Teilbereiche 10 der aufgebrachten Schicht 8 aufgeheizt, so dass sich die in dem jeweiligen ersten Teilbereich 10 befindlichen Körner des Pulvers 9 zwar erwärmen, aber noch nicht miteinander verbinden. Es wird ein Temperaturprofil der aufgebrachten Schicht 8 erfasst. Das Temperaturprofil wird in der Nähe des jeweiligen ersten Teilbereichs 10 als Funktion des Abstands x von dem jeweiligen ersten Teilbereich 10 und/oder der Zeit ausgewertet. Im Rahmen der Auswertung wird anhand des Temperaturprofils für den jeweiligen ersten Teilbereich 10 zumindest die lokale Wärmeleitfähigkeit k oder lokale Diffusivität D quantitativ oder qualitativ ermittelt. Mittels des Prozessstrahls 12 werden sodann lokal zweite Teilbereiche 11 der aufgebrachten Schicht 8, die die ersten Teilbereiche 10 zumindest teilweise überlappen, aufgeheizt, so dass sich die in dem jeweiligen zweiten Teilbereich 11 befindlichen Körner des Pulvers 9 miteinander verbinden. Mindestens eine die Aufheizung der zweiten Teilbereiche 11 beeinflussende Prozessgröße des Prozessstrahls 12 wird in Abhängigkeit von der zuvor für den zumindest überlappenden ersten Teilbereich 10 ermittelten lokalen Wärmeleitfähigkeit k oder Diffusivität D bestimmt.

Die vorliegende Erfindung weist viele Vorteile auf. Insbesondere können örtliche Schwankungen der Wärmeleitfähigkeit k bzw. der Diffusivität D auf einfache Weise berücksichtigt werden. Dies ist insbesondere dann von Bedeutung, wenn das Material, aus dem das Pulver 9 besteht, ein Metall ist. Denn Metalle weisen - im Gegensatz zu Kunststoffen - eine Wärmeleitfähigkeit k auf, die im Bereich von 100 W/mK und oftmals sogar darüber liegt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Betriebsverfahren für eine additive Fertigungseinrichtung, wobei iterativ folgende Sequenz von Schritten ausgeführt wird:
- mittels einer Aufbringeinrichtung (1) wird auf einen Untergrund eine Schicht (8) eines Pulvers (9) aufgebracht,
- mittels eines Prozessstrahls (12) werden in einem ersten Heizvorgang lokal erste Teilbereiche (10) der aufgebrachten Schicht (8) aufgeheizt, so dass sich die in dem jeweiligen ersten Teilbereich (10) befindlichen Körner des Pulvers (9) zwar erwärmen, aber noch nicht miteinander verbinden,
- mittels einer Erfassungseinrichtung (3) wird ein Temperaturprofil der aufgebrachten Schicht (8) erfasst,
- das Temperaturprofil wird in der Nähe des jeweiligen ersten Teilbereichs (10) als Funktion des Abstands (x) von dem jeweiligen ersten Teilbereich (10) und/oder der Zeit ausgewertet,
- im Rahmen der Auswertung wird anhand des Temperaturprofils für den jeweiligen ersten Teilbereich (10) zumindest die lokale Wärmeleitfähigkeit (k) oder lokale Diffusivität (D) quantitativ oder qualitativ ermittelt,
- mittels des Prozessstrahls (12) werden in einem zweiten Heizvorgang lokal zweite Teilbereiche (11) der aufgebrachten Schicht (8), die die ersten Teilbereiche (10) zumindest teilweise überlappen, aufgeheizt, so dass sich die in dem jeweiligen zweiten Teilbereich (11) befindlichen Körner des Pulvers (9) nicht nur erwärmen, sondern auch miteinander verbinden, wobei mindestens eine die Aufheizung der zweiten Teilbereiche (11) beeinflussende Prozessgröße des Prozessstrahls (12) in Abhängigkeit von der zuvor für den zumindest überlappenden ersten Teilbereich (10) ermittelten lokalen Wärmeleitfähigkeit (k) oder Diffusivität (D) bestimmt wird.

2. Betriebsverfahren nach Anspruch 1,
**dadurch gekennzeichnet,**
**dass** während des zweiten Heizvorgangs in den zweiten Teilbereichen (11) ein Sintern oder ein Schmelzen des aufgebrachten Pulvers (9) erfolgt.

3. Betriebsverfahren nach Anspruch 1 oder 2,
**dadurch gekennzeichnet,**
**dass** der Prozessstrahl (12) ein Laser- oder Elektronenstrahl ist.

4. Betriebsverfahren nach Anspruch 1, 2 oder 3,
**dadurch gekennzeichnet,**
**dass** mindestens einer der ersten Teilbereiche (10) als lineare Struktur ausgebildet ist und dass das Temperaturprofil orthogonal zu der linearen Struktur in einer Dimension ausgewertet wird.

5. Betriebsverfahren nach einem der obigen Ansprüche,
**dadurch gekennzeichnet,**
**dass** mindestens einer der ersten Teilbereiche (10) als punktuelle Struktur ausgebildet ist und dass das Temperaturprofil orthogonal zu der punktuellen Struktur in einer Dimension oder in zwei Dimensionen ausgewertet wird.

6. Betriebsverfahren nach einem der obigen Ansprüche,
**dadurch gekennzeichnet,**
**dass** in dem Fall, dass ein zweiter Teilbereich (11) als langgestreckte Struktur ausgebildet ist oder eine Grenzkante aufweist, der jeweilige erste Teilbereich (10) als parallel oder orthogonal zu dem zweiten Teilbereich (11) oder parallel oder orthogonal zu der Grenzkante verlaufende lineare Struktur ausgebildet ist und in dem Fall, dass ein zweiter Teilbereich (11) eine Ecke oder einen Überhang aufweist, der jeweilige erste Teilbereich (10) die Ecke oder den Überhang umfasst.

7. Betriebsverfahren nach einem der obigen Ansprüche,
**dadurch gekennzeichnet,**
- **dass** vor dem ersten Heizvorgang die lokale Dicke (d) der aufgebrachten Schicht (8) ermittelt wird und im Rahmen der Bestimmung einer die Aufheizung der ersten Teilbereiche (10) beeinflussenden Prozessgröße des Prozessstrahls (12), im Rahmen der Ermittlung der lokalen Wärmeleitfähigkeit (k) oder lokalen Diffusivität (D) und/oder im Rahmen der Bestimmung der mindestens einen die Aufheizung der zweiten Teilbereiche (11) beeinflussenden Prozessgröße des Prozessstrahls (12) zusätzlich zur lokalen Wärmeleitfähigkeit (k) oder lokalen Diffusivität (D) berücksichtigt wird oder
- **dass** nach dem ersten Heizvorgang die lokale Dicke (d) der aufgebrachten Schicht (8) ermittelt wird und im Rahmen der Ermittlung der lokalen Wärmeleitfähigkeit (k) oder lokalen Diffusivität (D) und/oder im Rahmen der Bestimmung der mindestens einen die Aufheizung der zweiten Teilbereiche (11) beeinflussenden Prozessgröße des Prozessstrahls (12) zusätzlich zur lokalen Wärmeleitfähigkeit (k) oder lokalen Diffusivität (D) berücksichtigt wird.

8. Betriebsverfahren nach Anspruch 7,
**dadurch gekennzeichnet,**
**dass** nach dem Ermitteln der lokalen Dicke (d), aber vor dem nächsten Heizvorgang ein Ausgleichsvorgang mit dem Ziel, Schwankungen der lokalen Dicke (d) auszugleichen, durchgeführt wird.

9. Betriebsverfahren nach einem der obigen Ansprüche,
**dadurch gekennzeichnet,**
**dass** zusätzlich die lokale Wärmekapazität (c) ermittelt wird und dass auch die lokale Wärmekapazität (c) im Rahmen der Bestimmung der mindestens einen die Aufheizung der zweiten Teilbereiche (11) beeinflussenden Prozessgröße des Prozessstrahls (12) berücksichtigt wird.

10. Betriebsverfahren nach einem der obigen Ansprüche,
**dadurch gekennzeichnet,**
**dass** als Prozessgröße des Prozessstrahls (12) mindestens eine der folgenden Größen verwendet wird:
- die Leistung des Prozessstrahls (12) als solche,
- die Vorschubgeschwindigkeit, mit welcher der Prozessstrahl (12) über die Schicht (8) bewegt wird,
- eine Modulation der Leistung des Prozessstrahls (12),
- eine Fokusgröße des Prozessstrahls (12).

11. Betriebsverfahren nach einem der obigen Ansprüche,
**dadurch gekennzeichnet,**
**dass** das Temperaturprofil vor der Erfassung durch die Erfassungseinrichtung (3) spektral gefiltert wird, so dass der Prozessstrahl (12) selbst im Temperaturprofil ausgeblendet wird.

12. Betriebsverfahren nach einem der obigen Ansprüche,
**dadurch gekennzeichnet,**
**dass** als Erfassungseinrichtung (3) Thermographie-Detektoren verwendet werden.

13. Computerprogramm für eine Steuereinrichtung (4) einer additiven Fertigungseinrichtung, wobei das Computerprogramm Maschinencode (6) umfasst, der von der Steuereinrichtung (4) unmittelbar abarbeitbar ist, wobei die Abarbeitung des Maschinencodes (6) durch die Steuereinrichtung (4) bewirkt, dass die Steuereinrichtung (4) die additive Fertigungseinrichtung gemäß einem Betriebsverfahren nach einem der obigen Ansprüche betreibt.

14. Steuereinrichtung für eine additive Fertigungseinrichtung, die mit einem Computerprogramm (5) nach Anspruch 13 programmiert ist, so dass sie im Betrieb die additive Fertigungseinrichtung gemäß einem Betriebsverfahren nach einem der obigen Ansprüche betreibt.

15. Additive Fertigungseinrichtung,
- wobei die additive Fertigungseinrichtung eine Aufbringeinrichtung (1) aufweist, mittels derer auf einen Untergrund eine Schicht (8) eines Pulvers (9) aufgebracht wird,
- wobei die additive Fertigungseinrichtung einen Prozessstrahlgenerator (2) aufweist, der einen Prozessstrahl (12) generiert, mittels dessen lokal jeweils ein Teilbereich (10, 11) der aufgebrachten Schicht (8) aufgeheizt wird,
- wobei die additive Fertigungseinrichtung eine Erfassungseinrichtung (3) aufweist, mittels derer ein Temperaturprofil der aufgebrachten Schicht (8) erfasst wird,
- wobei die additive Fertigungseinrichtung eine Steuereinrichtung (4) nach Anspruch 14 aufweist.
